# EUROPEAN PATENT APPLICATION

(11) **EP 1 211 840 A1**
(43) Date of publication of application: **05.06.2002**
(21) Application number: 01304860.8
(22) Date of filing: 04.06.2001
(51) Int. Cl.: H04L 1/18, H04B 7/26, H04Q 7/22

(54) **Hybrid ARQ with parallel packet transmission**

(30) Priority: 29.11.2000 US 725437
(71) Applicant: LUCENT TECHNOLOGIES INC., Murray Hill, New Jersey 07974-0636 (US)
(72) Inventor: Farooq, Ullah Khan, Manalapan, New Jersey 07728 (US); Sanjiv, Nanda, Clarksburg, New Jersey 08510 (US)
(74) Representative: Buckley, Christopher Simon Thirsk

(57) **Abstract**

Disclosed is an ARQ technique that efficiently utilizes channel resources while allowing for scheduling flexibility. The ARQ technique is an asynchronous parallel packet transmission technique which utilizes packet identifiers, sequence identifiers and user identifiers. The ARQ technique does not require a strict timing relationship to exist between parallel channels and physical layer frames because the identifiers would indicate to the user the user to whom a sub-packet is intended, the identity of the sub-packet and the sequence of the sub-packet.

## Description

### CROSS REFERENCE TO RELATED APPLICATIONS

Related subject matter is disclosed in the following applications: U.S. Patent Application entitled "Method and Apparatus For Asynchronous Incremental Redundancy Reception In A Communication System", Serial No. 09/660,092, filed September 12, 2000; and U.S. Application entitled "Method and Apparatus For Asynchronous Incremental Redundancy Transmission In A Communications System", Serial No. 09/660,098, filed September 12, 2000.

### FIELD OF THE INVENTION

The present invention relates generally to communication systems and, in particular, to an Automatic Repeat Request (ARQ) technique for communication systems.

### BACKGROUND OF THE RELATED ART

The quality of communication channels within communication systems determines the efficiency of the communication system. One measure of efficiency is the system's throughput. The throughput is the amount of information that is successfully transmitted and received in a communication system for a defined period of time. It is therefore a goal of service providers (owners and operators of communication systems) to have as many of their communication channels as possible operating at an acceptable throughput.

In wireless communication systems, an air interface is used for the exchange of information between a mobile (e.g., cell phone) and a base station or other communication system equipment. The air interface comprises a plurality of communication channels. The quality of transmissions over any one of the channels varies. Thus, for example, any particular channel between the base station and a mobile may have an acceptable throughput at one instant and unacceptable throughput at another instant. Service providers not only want to maintain the throughput of their air interface at an acceptable level, but also want to increase the throughput as much as possible.

Many times the information transmitted through a relatively low quality communication channel is adversely affected to such an extent that the information contains errors when received. To compensate for low quality communication channels, communication systems apply the technique of retransmission of information. Transmitting equipment retransmits the information to receiving equipment a certain number of times to increase the likelihood that the information, once received, contains no errors or contains an acceptable number of errors. The receiving equipment can be either system equipment such as a base station or subscriber equipment such as a cell phone. Similarly, the transmitting equipment can also be system equipment or subscriber equipment. System equipment is any equipment owned and operated by the service provider.

A widely used technique for the retransmission of information due to errors detected at the receiving equipment is called Automatic Retransmission Request (ARQ). The ARQ method is a technique of confirming that information transmitted through a communication channel has been received without any errors. Receiving equipment sends a message to transmitting equipment confirming that the transmitted information was received without errors. If the transmitted information was received with errors, the receiving equipment sends a message to the transmitting equipment asking the transmitter to retransmit the information. The transmitter can retransmit all or part of the previously transmitted information using the same or different channel coding.

ARQ is typically used in concert with channel coding. Channel coding involves the creation of redundancy in the transmitted information to allow receiving equipment to check, as well as correct, for errors. Also, the receiving equipment performs a corresponding decoding operation to obtain the information. The decoding operation is performed by a decoder. Two of the main ARQ methods are the Selective Retransmit (SR) protocol and the stop-and-wait protocol. In both SR ARQ and stop-and-wait ARQ, the concept of Incremental Redundancy (IR) is used. Incremental Redundancy (IR) and/or soft combining, are techniques used to improve the efficiency of ARQ. In IR, the receiving equipment attempts to combine, in the decoder, retransmitted information along with earlier transmissions of the same information that used the same or different coding. The decoding of combined information improves the performance of the decoding operation and increases the likelihood of successful decoding; decoding of combined information reduces the number of retransmissions that would be required to successfully receive the transmitted information. In the prior art, IR schemes that operate with SR ARQ and with stop-and-wait ARQ have been defined.

In the IR scheme operating with SR ARQ, data is typically encoded, formatted and packaged as packets comprising payload, header and trailer portions. The trailer and header portions are overhead in that they do not contain subscriber information; they contain information identifying the subscriber (i.e., identification information) and information on how to process the packet (i.e., process information). The information identifying the particular subscriber from whom the information in the payload of the packet originated is kept in the header. Also, the header contains information on how to soft combine, at the decoder, the received packets so as to properly decode the payload information.

An arbitrary number of copies of each block of information can be sent so that the original information can be derived from one or from a combination of the received packets of information. Different subscribers can transmit different amounts of information and at different rates. As described above, however, much information is needed to describe how the information is to be processed once it is received. The SR protocol is not bandwidth efficient because of the excessive overhead information. However, without the use of the header information, the receiving equipment is not able to identify, and properly combine and decode the received packets of information. To reduce the likelihood that the header information is contaminated resulting in errors, the header portion of the packets is heavily coded. The heavy coding is more robust coding that requires more redundancy to be added to the header information. Thus, the heavy coding creates even more overhead which reduces the throughput of the communication channels thus reducing the efficiency of the communication system.

In the IR scheme with stop-and-wait ARQ protocol, a block of information is coded into n packets where n is an integer equal to 2 or greater. Each one of the packets by itself or in combination with another packet or a portion of another packet can be used to decode the original block of information . One or more of the packets are transmitted during a time slot(s) assigned to a particular subscriber. The transmitted packets are received and decoded. If the decoding was successful (i.e., no errors detected or an acceptable number of errors detected), the receiving equipment transmits an ACK (ACKnowledge) message to the transmitting equipment indicating that the information was properly decoded and that a new block of information can be transmitted. If the decoding was unsuccessful (i.e., error detected or an unacceptable number of errors detected), the receiving equipment transmits a NACK (Negative ACKnowledge) which is an indication to the transmitting equipment to retransmit another group of packets (or another single packet) representing the same block of information. The ACK message is thus an example of a positive confirmation message and the NACK message is an example of a negative confirmation message.

Note that upon unsuccessful decoding of a received packet, the receiving equipment stores the received error-containing packet. The receiving equipment will attempt to combine this stored packet with subsequent repeat packet transmissions for the same block of information, to properly decode the information within such block. The ACK or NACK confirmation messages are hereinafter referred to as the ACK/NACK messages.

The receiving equipment transmits the ACK/NACK message following the reception of a packet in a particular time slot relative to the time slot in which the packet was received. Thus, the ACK/NACK messages are transmitted in accordance with a particular timing relationship to the packet reception. The transmit equipment associates a particular ACK/NACK message with a particular packet transmission based on the time slot or the time period within which such a message was received. For example, an ACK/NACK message received during slot period m corresponds to a packet transmission in slot m-k, where k represents a particular number (including fractions of time slots) of time slots which is fixed by the communication system; m is an integer equal to I or greater an k is a number greater than zero. The number of time slots represented by k is a roundtrip delay for transmitting equipment representing the time elapsed between a transmission of a packet and the reception of a responding ACK/NACK message.

Upon receipt of a NACK(in a particular time slot) in response to a packet transmission, the transmitting equipment transmits a repeat packet representing the same block of information (which may or may not have been channel coded differently). The transmitting equipment transmits the repeat packet transmission a certain number of time slots following the receipt of the ACK/NACK message. Thus, the repeat packet is transmitted in accordance with a particular timing relationship to the received ACK/NACK message.

The receive equipment associates a particular repeat packet transmission with a ACK/NACK message based on the time slot or the time period within which such a message was received. For example, a repeat packet transmission received during slot period p corresponds to a ACK/NACK message transmitted in slot p-j, where j represents a certain number (including fractions of time slots) of time slots which is fixed by the communication system; p is an integer equal to 1 or greater and j is a number greater than zero. The number of time slots represented by j is a roundtrip delay for receiving equipment representing the time elapsed between the transmission of an ACK/NACK message and the reception of a repeat packet. Because of the timing relationship, there is no need to transmit identification information in the headers of the packets because the packets can be identified and soft combined based on the time slot in which they were received.

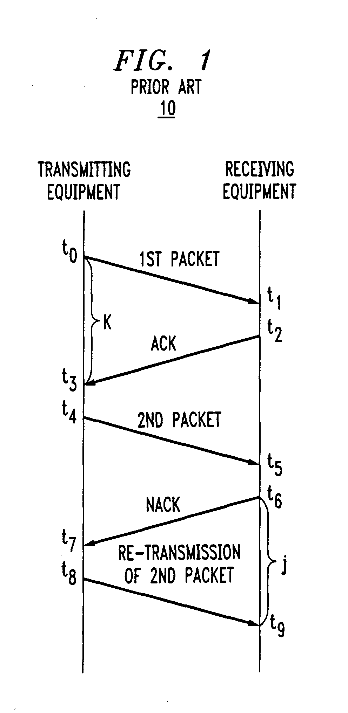

FIG. 1 depicts an example 10 illustrating the stop-and-wait protocol. Transmitting equipment transmits a first packet to receiving equipment at time t₀. Upon receipt of the first packet at time t₁, the receiving equipment attempts to decode the first packet from time t₁ to t₂. The decoding is successful so the receiving equipment transmits an ACK to the transmitting equipment at time t₂. The ACK is received at time t₃, which corresponds to k time slots after time t₀. Based on a timing relationship and the fact that the ACK was received k time slots after transmission of the first packet at time t₀, the transmitting equipment associates the ACK with the receiving equipment to which the first packet was transmitted.

Upon processing the ACK, the transmitting equipment determines that the first packet was successfully decoded by the receiving equipment. Accordingly, at time t₄, the transmitting equipment transmits a second packet. The second packet is received at time t₅. This time the receiving equipment is unable to successfully decode the second packet. Accordingly, the receiving equipment transmits a NACK at time t₆. The NACK is received at time t₇, which corresponds to k time slots after time t₄. In response to the NACK, the transmitting equipment re-transmits the second packet at time t₈, wherein the re-transmitted second packet may or may not be channel coded in the same manner as the first transmission of the second packet. The re-transmitted second packet is received by the receiving equipment at time t₉, which corresponds to j time slots after time t₆. Based on the timing relationship and the fact that the packet was received j time slots after transmission of the NACK at time t₆, the transmitting equipment determines the received packet is a response to its NACK transmitted at time t₆, i.e., a retransmission of the second packet.

The stop-and-wait protocol in the prior art is thus a Synchronous Protocol in that the repeat packet transmission are transmitted within a strict timing relationship (defined by the communication system) between transmitting equipment and receiving equipment. Consecutive packet transmissions of the same block of data are separated by a time period usually expressed in terms of number of slots where such time period is constant. In sum, when a transmission is made, an ACK/NACK message indicating a NACK (or ACK) followed by a repeated packet transmission (or a new packet transmission) must be transmitted a certain fixed number of slots later.

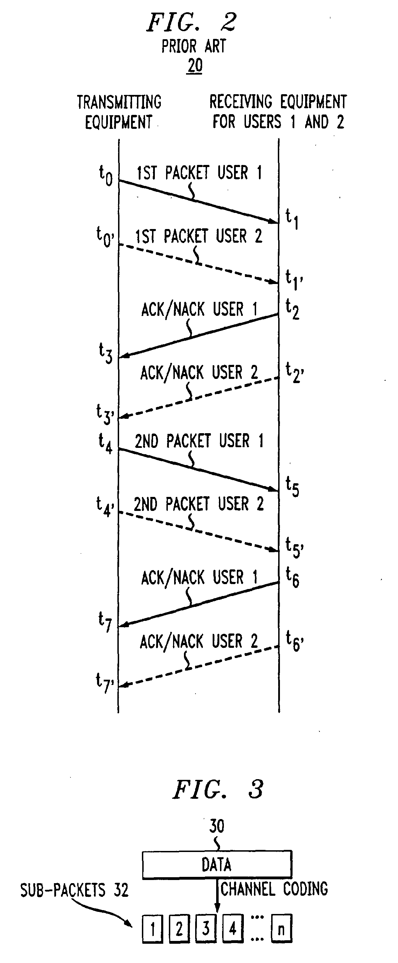

A problem with the stop-and-wait protocol is that the channel is unused when the transmitting equipment is waiting for feedback from the receiving equipment. Some solutions proposed in the prior art allow for parallel stop-and-wait transmissions to the same user or to different users by making use of timing relationships. That is, during the time period between transmissions, other transmissions (associated with the same or other subscribers) can occur. FIG. 2 depicts an example 20 illustrating a parallel stop-and-wait protocol. Between the times t₀ and t₃ during which the transmitting equipment is awaiting an ACK/NACK message from the receiving equipment of user one, the transmitting equipment transmits a packet to the receiving equipment of user two in an unused time slot or parallel channel (at time t₀'). The protocol used in parallel stop-and-wait transmissions involve using physical layer timing, i.e., parallel channels are identified by physical layer frames. Note that a physical layer frame corresponds to the transmission time of one packet. Depending on the packet size and transmission rate a physical layer frame may consist of one or more slots. In the following example, the frame duration is equal to one slot. For example, the channels for users one and two are mapped to the odd-numbered and even-numbered physical layer slots, respectively. Moreover, instead of users one and two, the parallel channels may be used for transmission of different packets to the same user.

Strict timing relationships between parallel channels and physical layer slots can result in the inefficient usage of the channel. For example, if the transmission for user one over the parallel channel over odd-numbered slots is completed, re-transmissions for user two which are/were being performed on the parallel channel over even numbered slots can not be performed on the parallel channel with odd-numbered slots because user two would be expecting the re-transmission to occur over the parallel channel over even numbered slots. Thus, the parallel channel with odd-numbered slots may go unused.

Additionally, strict timing relationships between parallel channels and physical layer slots can also result in scheduling inflexibility. To increase system throughput, scheduling flexibility is desired such that data intended for a particular receiving equipment is transmitted when there exists favorable channel conditions. Strict timing limits this desired scheduling flexibility, particularly with regards to re-transmissions.

Accordingly, a need exists for an ARQ technique that efficiently utilizes channel resources while allowing for scheduling flexibility.

### SUMMARY OF THE INVENTION

The present invention is an ARQ technique that efficiently utilizes channel resources while allowing for scheduling flexibility. The ARQ technique of the present invention is an asynchronous parallel packet transmission technique which utilizes encoder packet identifiers, sequence identifiers and user identifiers. The ARQ technique of the present invention does not require a strict timing relationship to exist between parallel channels and physical layer frames because the identifiers would indicate to the user the user to whom a sub-packet is intended, the identity of the sub-packet and the sequence of the sub-packet. In one embodiment, the present invention is a method of transmitting a sub-packet in a parallel channel encoder packet transmission system comprising the steps of attaching a sequence identifier, a user identifier and an encoder packet identifier to a first sub-packet to produce a first sub-packet with identifiers, and transmitting the first sub-packet with identifiers to a user indicated by the user identifier.

### BRIEF DESCRIPTION OF THE DRAWINGS

The features, aspects, and advantages of the present invention will become better understood with regard to the following description, appended claims, and accompanying drawings where:
FIG. 1 depicts an example illustrating the stop-and-wait protocol in accordance with the prior art;
FIG. 2 depicts an example illustrating a parallel stop-and-wait protocol in accordance with the prior art;
FIG. 3 depicts a block of information to be transmitted to a user; and
FIG. 4 depicts an example illustrating the present invention for a four parallel encoder packet transmission system.

### DETAILED DESCRIPTION

The present invention is an ARQ technique that efficiently utilizes channel resources while allowing for scheduling flexibility. The ARQ technique of the present invention is an asynchronous parallel packet transmission technique which utilizes packet identifiers, sequence identifiers and user identifiers. The ARQ technique of the present invention does not require a strict timing relationship to exist between parallel channels and physical layer frames because the identifiers would indicate the user to whom a sub-packet is intended, the identity of the sub-packet and the sequence of the sub-packet.

FIG. 3 depicts a block of information 30 to be transmitted to a user. Block of information (encoder packet) 30 is channel coded into n sub-packets 32. Before each of the n sub-packets are transmitted, a user identifier (UI), an encoder packet identifier (EPI) and a subpacket sequence identifier (SI) is added to each sub-packet to produce a sub-packet with identifiers for transmission. The identifiers being positioned in a particular position with respect to the sub-packet such that receiving equipment receiving the sub-packet can retrieve the information being provided by identifiers.

The user identifier corresponds to the identity of the user. The user identifier indicates the user to whom the packet is intended. The encoder packet identifier identifiers an encoder packet. In one embodiment, the encoder packet identifiers correspond to at least the number of parallel channels in the packet transmission system. The number of bits used to represent the encoder packet identifier depends on the number of parallel channels. For example, if there are two parallel channels, one bit will be used to identify both channels, i.e., a bit with a value of 1 to identify a first channel and a bit with a value of 0 to identify a second channel. If there are four parallel channels, two bits are used to identify the channels. Once a transmission of a packet is successful, the encoder packet identifier used for the successful packet transmission may be re-used for a different packet transmission.

The sequence identifier indicates the particular sub-packet transmission of a encoder packet at the link layer. In one embodiment, the sequence identifier is represented by one bit. Such bit is used to indicate whether the sub-packet transmission is a first or new transmission of the encoder packet, or a re-transmission or continuation transmission of the encoder packet. For example, for a first sub-packet transmission of an encoder packet, the sequence identifier is a bit with a value of 0. For a re-transmission sub-packet of the encoder packet (i.e., second, third, fourth, etc. sub-packet transmission of the same encoder packet), the sequence identifier is a bit with a value of 1. Note that the term "retransmission sub-packet" when used to describe a transmission or re-transmission of an encoder -packet should be understood to describe the retransmission sub-packet as not necessarily being identical to a previous sub-packet, but rather as soft combinable with the previous sub-packet In another embodiment, the sequence identifier is represented by two bits, wherein a bit value of 00, 01, 10 and 11 indicates the first, second, third and fourth transmission of a sub-packet, respectively. It should be understood that more than two bits may also be used to represent the sequence identifier, and that the present invention should not be limited in this manner.

The present invention does not require strict timing relationships to be maintained with respect to mapping re-transmissions of sub-packets to physical layer frames or slots. Because strict timing relationships do not need to be maintained, re-transmissions of subpackets may be performed over odd-numbered slots even if the first or other previous transmission of sub-packets for the encoder packet were transmitted over even-numbered slots. Thus, the present invention can be implemented to utilize channels more efficiently and to accommodate scheduling flexibility.

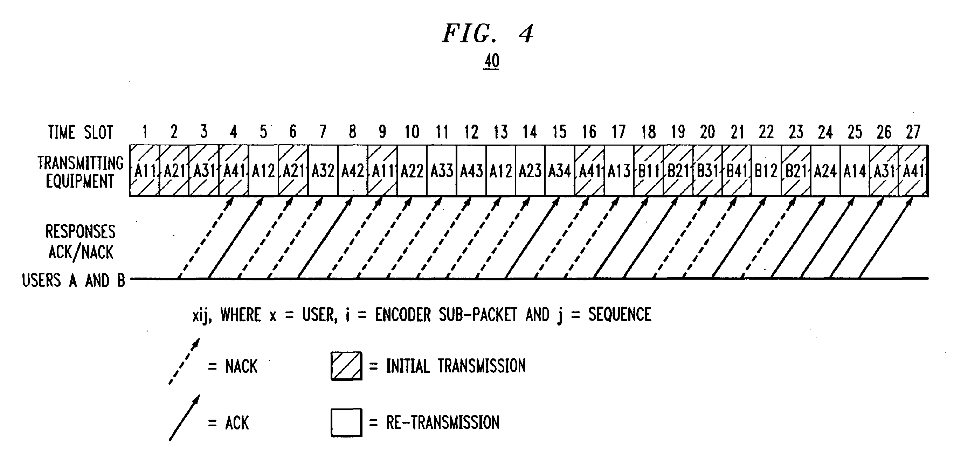

FIG. 4 depicts an example 40 illustrating the present invention for a four parallel encoder packet transmission system. In this example, a block of information for user A is channel coded into nine encoder packets, and a block of information for user B is channel coded into five encoder packets. Users A and B transmits channel condition measurements to the transmitting equipment. Based on the channel conditions, the transmitting equipment determines that channel conditions are favorable for user A but not for user B during time slots 1-17. Thus, the sub-packets for user A are transmitted in time slots 1-17. However, before the sub-packets are transmitted, the identifiers are added to the sub-packets. The sub-packets are identified in example 40 using the following nomenclature Xij for denoting the identifiers, where X is the user identifier, i is the encoder packet identifier and j is the sequence identifier for the sub-packet. For example, A21 identifies the associated sub-packet as belonging to user A with an encoder packet identifier of 2 and a sequence identifier of 1 (indicating that this is the first sub-packet transmission of this encoder packet). Note that, in this example, the sequence identifier and encoder packet identifier each comprises at least two bits.

In time slots 1-4, the first sub-packets of four encoder packets for user A are transmitted over four parallel channels (encoder packet identifiers), i.e., channels 1-4, by the transmitting equipment. Note that the hashed boxes indicate that the sub-packet transmission is an initial transmission. The sub-packets are received by users A and B one time slot after they were transmitted. The user identifiers indicate to users A and B that the associated sub-packet is intended for user A. Thus, user A will attempt to decode the sub-packets and provide a response to the transmitting equipment in the form of an ACK/NACK message.

Upon successfully or unsuccessfully decoding the sub-packets transmitted in time slots 1-4, user A transmits the appropriate ACK/NACK messages which are received by the transmitting equipment in time slots 4-7. Specifically, user A transmits NACK messages (represented by a dashed line) for sub-packets A11, A31 and A41 and an ACK message (represented by a solid line) for sub-packet A21.

In time slot 4, the transmitting receives a NACK. Based on a timing relationship between the sub-packet transmission and the ACK/NACK reception, the transmitting equipment can determine which ACK/NACK message is associated with which sub-packet transmission. Specifically, in this example, the timing relationship between the sub-packet transmission and the ACK/NACK message is three time slots. Thus, the transmitting equipment associates the NACK received in time slot 4 with the first sub-packet, which was transmitted in time slot 1. Note that for undecodable sub-packets, user A stores such sub-packet in memory so it can be later soft combined with a subsequent re-transmission sub-packet of the same encoder packet.

In time slot 5, the transmitting equipment receives an ACK for the sub-packet A21 (corresponding to the second encoder packet) which was transmitted in time slot 2, and responds to the NACK received for first sub-packet A11 in time slot 4 with a re-transmission sub-packet of that encoder packet A1, which is denoted in example 40 as A12. The sequence identifier for the re-transmitted first sub-packet having a value of two, which indicates to user A that this sub-packet is a re-transmission and can be soft combined with the previously stored subpacket having the same encoder packet identifier. That is, sub-packet A12 can be soft combined with sub-packet A11. Note that sub-packets A12 and A11 are not necessarily identical. The only requirement between sub-packets A12 and A11 is that the two sub-packets be soft combinable - that is, sub-packets A11 and A12 may be the results of two different channel coding techniques that permit the results to be soft combined. An example of this is that A11 and A12 are produced by puncturing the same mother code. Further note that the non-hashed boxes indicate that the sub-packet transmission is a re-transmission.

Note that there is a one time slot difference between the reception of the NACKs and the subsequent re-transmission of the associated sub-packet. This should not be construed to require the present invention to have this timing relationship, or any timing relationship, between NACKs and re-transmissions.

In time slot 6, the transmitting equipment receives a NACK for the sub-packet A31 (corresponding to the third encoder packet) which was transmitted in time slot 3, and transmits the sub-packet A21 (corresponding to the fifth encoder packet) to user A. Note that the fifth encoder packet transmitted in time slot 6 uses the same identifiers as the second encoder packet when it was transmitted in time slot 1, i.e., A21. The sequence identifier with a value of 1 indicates to user A that the associated sub-packet is the first transmission of this encoder packet and that it should not be soft-combined with any previously transmitted sub-packet. Thus, the sub-packet A21 transmitted in time slot 6 should not be soft combined with the sub-packet A21 transmitted in time slot 2. Thus the encoder packet identifier value of '2' is reused for the next encoder packet since the previous transmission of A21 was acknowledged.

In time slot 7, the transmitting equipment receives a NACK for the sub-packet A41 (corresponding to the fourth encoder packet) which was transmitted in time slot 4, and responds to the NACK received for sub-packet A31 (corresponding to the third encoder packet) in time slot 6 with a re-transmission sub-packet of that encoder packet, i.e., A32. In time slot 8, the transmitting equipment receives an ACK for the re-transmission of the sub-packet A12 (corresponding to the first encoder packet) in time slot 5, and responds to the NACK received for the sub-packet A41 (corresponding to the fourth encoder packet) in time slot 6 with a re-transmission sub-packet of that encoder packet, i.e., A42. In time slot 9, the transmitting equipment receives a NACK for the transmission of the sub-packet A21 (corresponding to the fifth encoder packet) in time slot 6, and then transmits a new sub-packet for the sixth encoder - packet to user A.

In time slot 10, the transmitting equipment receives a NACK for the re-transmission of the sub-packet A32 (corresponding to the third encoder packet) which was transmitted in time slot 7, and responds to the NACK received for sub-packet A21 (corresponding to the fifth encoder packet) in time slot 9 with a re-transmission sub-packet of that encoder packet, i.e., A22. In time slot 11, the transmitting equipment receives a NACK for the re-transmission of the sub-packet A42 (corresponding to the fourth encoder packet) which was transmitted in time slot 8, and responds to the NACK received for third sub-packet A32 in time slot 10 with a re-transmission sub-packet of that encoder packet, i.e., A33. In time slot 12, the transmitting equipment receives a NACK for the sub-packet A11 (corresponding to the sixth encoder packet) which was transmitted in time slot 9, and responds to the NACK received for sub-packet A42 (corresponding to the fourth encoder packet) in time slot 11 with a re-transmission sub-packet of that encoder packet, i.e., A43. In time slot 13, the transmitting equipment receives a NACK for the re-transmission of the sub-packet A22 (corresponding to the fifth encoder packet) which was transmitted in time slot 10, and responds to the NACK received for sub-packet A11 (corresponding to the sixth encoder packet) in time slot 11 with a re-transmission sub-packet of that encoder packet, i.e., A12. In time slot 14, the transmitting equipment receives a NACK for sub-packet A33 (corresponding to the third encoder packet) which was transmitted in time slot 11, and responds to the NACK received for sub-packet A22 (corresponding to the fifth encoder packet) in time slot 13 with a re-transmission of that sub-packet, i.e., A23.

In time slot 15, the transmitting equipment receives an ACK for the third transmission (or second re-transmission) of the sub-packet A43 (corresponding to the fourth encoder packet) in time slot 12, and responds to the NACK received for the sub-packet A33 (corresponding to the third encoder packet) in time slot 14 with a re-transmission of that sub-packet, i.e., A34.

In time slot 16, the transmitting equipment receives a NACK for the second transmission (or re-transmission) of the sub-packet(corresponding to the sixth encoder packet) in time slot 13, and transmits the seventh encoder packet to user A. In time slot 17, the transmitting equipment receives a NACK for the third transmission of the sub-packet A23 (corresponding to the fifth encoder packet) in time slot 14, and responds to the NACK received for the sub-packet A12 (corresponding to the sixth encoder packet) in time slot 16 with a re-transmission of that sub-packet, i.e., A13.

In time slot 17 (or some earlier time slot), the transmitting equipment determines from channel condition measurements received from users A and B that the channel conditions have changed. Specifically, the channel conditions are now more favorable for user B than for user A. Accordingly, the transmitting equipment schedules the sub-packets for user B to be transmitted in the subsequent time slots.

In time slot 18, the transmitting equipment receives an ACK for the fourth transmission of the third encoder packet in time slot 15, and transmits the first sub-packet to user B, i.e., B11. In time slot 19, the transmitting. equipment receives an ACK for the transmission of the sub-packet (corresponding to the seventh encoder packet to user A) in time slot 16, and transmits the second sub-packet to user B, i.e., B21. In time slot 20, the transmitting equipment receives a NACK for the transmission of the sub-packet A13 (corresponding to the sixth encoder packet) in time slot 17, and transmits the third sub-packet to user B, i.e., B31. In time slot 21, the transmitting equipment receives a NACK for the transmission of the first sub-packet B11 for user B in time slot 18, and transmits the fourth sub-packet to user B, i.e., B41.

In time slot 22, the transmitting equipment receives an ACK for the transmission of the sub-packet B21 (corresponding to the second encoder packet) for user B in time slot 19, and responds to the NACK received for the sub-packet B 11 (corresponding to the first encoder packet) for user B in time slot 21 with a re-transmission of that sub-packet, i.e., B12. In time slot 23, the transmitting equipment receives a NACK for the transmission of the sub-packet B31 (corresponding to the third encoder packet) for user B in time slot 20, and transmits the fifth encoder packet to user B, i.e., B21.

In time slot 23 (or some earlier time slot), the transmitting equipment determines from channel condition measurements received from users A and B that the channel conditions have changed again. Specifically, the channel conditions are now more favorable for user A than for user B. Accordingly, the transmitting equipment schedules the sub-packets for user A to be transmitted in the subsequent time slots.

At this point, with respect to user A; the first, second, third, fourth and seventh encoder packets have been successfully decoded by user A; the fifth and sixth encoder packets have not been successfully decoded; and the eighth and ninth encoder packets for user A has not yet been transmitted by the transmitting equipment. Thus, the transmitting equipment re-transmits the sub-packets A24 and A14 (corresponding to the fifth and sixth encoder packets) in time slots 24 and 25, and transmits the sub-packets A31 and A41 (corresponding to the eighth and ninth encoder packet) in time slots 26 and 27, while receiving ACKs for the sub-packet transmissions for users B and A in time slots 21 to 24.

Note that the re-transmissions of the fifth and sixth encoder packets in time slots 24 and 25 (4k and 4k+1, with k=6), while the initial transmissions were over slots 6 and 9 (4k+2, with k=1, and 4k+1, with k=2), respectively. Thus the retransmission of an encoder packet is not required to be over the same one of four synchronous parallel channels m = 1, 2, 3, 4, that are identified by slots 4k+m. Advantageously, the present invention does not require re-transmissions of a encoder packet to be performed over the same synchronous parallel channel as earlier transmissions of the encoder packet nor require a strict timing relationship between NACKs and re-transmissions. The receiving equipment, e.g., user A, can determine which encoder packet is being re-transmitted by the identifiers even when the encoder packet is not re-transmitted in a known time slot after receipt of the NACK. Thus, re-transmissions may be asynchronous to previous transmissions. For example, the identifiers A24 would indicate to user A that the associated sub-packet is a re-transmission of the sub-packet associated with encoder packet identifier 2 and is intended for user A. Such sub-packets may be soft combined with sub-packets A23, A22 and A21.

Although the present invention has been described in considerable detail with reference to certain embodiments, other versions are possible. Therefore, the spirit and scope of the present invention should not be limited to the description of the embodiments contained herein.

## Claims

1. A method of transmitting a sub-packet in a parallel channel encoder packet transmission system comprising the steps of:
attaching a sequence identifier, a user identifier and a encoder packet identifier to a first sub-packet to produce a first sub-packet with identifiers; and
transmitting the first sub-packet with identifiers to a user indicated by the user identifier.

2. The method of claim 1, wherein the sequence identifier comprises one bit for indicating a first transmission or a re-transmission of the first sub-packet.

3. The method of claim 1, wherein the sequence identifier comprises more than one bit for indicating a transmission sequence of the first sub-packet.

4. The method of claim 1, wherein the encoder packet identifier comprises one bit if the parallel channel encoder packet transmission system has two channels.

5. The method of claim 1, wherein the encoder packet identifier comprises two bits if the parallel channel encoder packet transmission system has four channels.

6. The method of claim 1 comprising the additional steps of:
receiving a NACK from the user identified by the user identifier;
attaching a second sequence identifier, the user identifier and the encoder packet identifier to a new version of the first sub-packet to produce a new version sub-packet with identifiers, the new version first sub-packet being soft combinable with the first sub-packet, the second sequence identifier indicating that the new version sub-packet is a re-transmission of the first sub-packet; and
transmitting the new version first sub-packet with identifiers.

7. The method of claim 6, wherein the first sub-packet and new version of the first sub-packet are identical.

8. The method of claim 6, wherein the first sub-packet and new version of the first sub-packet are not identical.

9. The method of claim 6, wherein the first sub-packet with identifiers and the new version first sub-packet with identifiers are transmitted over different channels.

10. The method of claim 6, wherein the first sub-packet with identifiers and the new version first sub-packet with identifiers are transmitted over different channels.

11. A method of receiving a sub-packet in a parallel channel encoder packet transmission system comprising the steps of:
receiving at a receiver a sub-packet with a user identifier, a sequence identifier and an encoder packet identifier;
determining if the received sub-packet is intended for the receiver using the user identifier;
determining if the received sub-packet is a re-transmission of a previously received sub-packet using the sequence identifier; and
if the received sub-packet is a re-transmission of a previously received sub-packet, soft combining the received sub-packet with a previously received sub-packet having an identical encoder packet identifier.

12. The method of claim 11, wherein the received sub-packet and the previously received sub-packet having the identical encoder packet identifier were received over different channels.

13. The method of claim 11, wherein the received sub-packet and the previously received sub-packet having the identical encoder packet identifier were received over identical channels.
